# EUROPÄISCHE PATENTANMELDUNG

(11) **EP 2 631 836 A1**
(43) Veröffentlichungstag der Anmeldung: **28.08.2013**
(21) Anmeldenummer: 13152573.5
(22) Anmeldetag: 24.01.2013
(51) Int. Cl.: G06F 21/33, G06F 21/34, G06Q 30/06

(54) **Computerimplementiertes Verfahren für eine Nutzungskontrolle, Computerprogrammprodukt, Datenverarbeitungssystem und Transportsystem**

(30) Priorität: 23.02.2012 DE 102012202781
(71) Anmelder: Bundesdruckerei GmbH, 10969 Berlin (DE)
(72) Erfinder: Dietrich, Frank, 12437 Berlin (DE); Paeschke, Dr., Manfred, 16348 Wandlitz (DE)
(74) Vertreter: Richardt Patentanwälte GbR

(57) **Zusammenfassung**

Die Erfindung betrifft ein Computer implementiertes Verfahren für eine Nutzungskontrolle von mobilen Gegenständen (160) mit folgenden Schritten:
- Übertragung eines Auswahlsignals (168) zur Auswahl eines der mobilen Gegenstände von einem mobilen Telekommunikationsgerät (100) eines Nutzers (102) über ein Netzwerk (116) an ein Dienst-Computersystem (150),
- Erzeugung einer Anforderung (176) durch das Dienst-Computersystem für zumindest ein Attribut des Nutzers (102), wobei das zumindest eine Attribut in einem dem Nutzer (102) zugeordneten ID-Token gespeichert ist,
- Übertragung der Anforderung von dem Dienst-Computersystem an ein ID-Provider-Computersystem (136) über das Netzwerk,
- Authentifizierung des Nutzers gegenüber dem ID-Token,
- Authentifizierung des ID-Provider-Computersystems gegenüber dem ID-Token über das Netzwerk mit einem Zertifikat (144), in dem eine Leseberechtigung des ID-Provider-Computersystems für einen Lesezugriff zum Lesen des zumindest einen Attributs aus dem ID-Token definiert ist,
- nach erfolgreicher Authentifizierung des Nutzers und des ID-Provider-Computersystems gegenüber dem ID-Token, Lesezugriff des ID-Provider-Computersystems auf den ID-Token zum Lesen des zumindest einen Attributs über das Netzwerk,
- Übertragung des zumindest einen Attributs von dem ID-Token an das ID-Provider-Computersystem mit Ende-zu-Ende-Verschlüsselung über das Netzwerk aufgrund des Lesezugriffs,
- Erzeugung einer Antwort (178) auf die Anforderung durch das ID-Provider-Computersystem durch Signierung des ausgelesenen zumindest einen Attributs,
- Übertragung der Antwort von dem ID-Provider-Computersystem an das Dienst-Computersystem über das Netzwerk,
- Zuordnung der Antwort zu der Auswahl durch das Dienst-Computersystem,
- Speicherung der Auswahl durch das Dienst-Computersystem in einem ersten elektronischen Speicher (158) unter Verwendung des zumindest einen Attributs als Zugriffsschlüssel,
- Übertragung eines Nutzungsanforderungssignals (182) zur Anforderung einer Nutzung des ausgewählten Gegenstandes von dem mobilen Telekommunikationsgerät an das Dienst-Computersystem über das Netzwerk und nochmalige Übertragung des zumindest einen Attributs von dem ID-Token des Nutzers zu dem Dienst-Computersystem,
- Zugriff auf den ersten elektronischen Speicher mit Hilfe des nochmals übertragenen zumindest einen Attributs zur Ermittlung der gespeicherten Auswahl durch das Dienst-Computersystem,
- Übertragung eines Nutzungssignals (184) zur Ermöglichung der Nutzung des ausgewählten mobilen Gegenstandes von dem Dienst-Computersystem an eine dem Gegenstand zugeordnete Nutzungskontrolleinrichtung über das Netzwerk.

## Beschreibung

Die Erfindung betrifft ein computerimplementiertes Verfahren für eine Nutzungskontrolle von mobilen Gegenständen, wie zum Beispiel Fahrzeugen, insbesondere Kraftfahrzeugen, ein Computerprogrammprodukt, ein Datenverarbeitungssystem sowie ein Transportsystem.

Aus dem Stand der Technik ist das sogenannte Carsharing bekannt. Hierbei kann ein Fahrzeug per Telefon oder via Internet von registrierten Nutzern über eine Buchungszentrale bzw. ein Buchungsprogramm gebucht werden. Am Telefon muss sich ein Nutzer als berechtigt ausweisen und die gewünschte Carsharing-Station, an der Carsharing-Fahrzeuge geparkt sind, den Buchungszeitraum und das gewünschte Fahrzeugmodell nennen. Falls das gewünschte Fahrzeug nicht verfügbar ist, werden am Telefon alternative Vorschläge unterbreitet. Über einen Internetzugang kann der Nutzer die Buchung auch selbst vornehmen. Ein Buchungsprogramm zeigt dem Nutzer die freien Fahrzeuge und reservierbaren Buchungszeiträume an.

Der Erfindung liegt demgegenüber die Aufgabe zugrunde, ein verbessertes computerimplementiertes Verfahren für eine Nutzungskontrolle von mobilen Gegenständen, insbesondere Fahrzeugen, beispielsweise Kraftfahrzeugen, zu schaffen sowie ein entsprechendes Computerprogrammprodukt, Datenverarbeitungssystem und Transportsystem.

Die der Erfindung zugrunde liegenden Aufgaben werden jeweils mit den Merkmalen der unabhängigen Ansprüche gelöst. Ausführungsformen der Erfindung sind in den abhängigen Ansprüchen angegeben.

Nach Ausführungsformen der Erfindung wird ein computerimplementiertes Verfahren für eine Nutzungskontrolle von mobilen Gegenständen geschaffen. Zur Teilnahme an dem Verfahren ist lediglich erforderlich, dass die potenziellen Nutzer jeweils über einen ID-Token verfügen. Eine Registrierung der Nutzer ist nicht zwingend erforderlich.

Wenn einer der Nutzer einen der mobilen Gegenstände nutzen möchte, so wird wie folgt vorgegangen:

Von einem mobilen Telekommunikationsgerät des Nutzers wird ein Auswahlsignal zur Auswahl eines der mobilen Gegenstände über ein Netzwerk an ein Dienst-Computersystem übertragen.

Unter einem "ID-Token" wird hier insbesondere ein tragbares elektronisches Gerät verstanden, welches zumindest einen Datenspeicher zur Speicherung des zumindest einen Attributs und eine Kommunikations-Schnittstelle zum Auslesen des Attributs aufweist. Vorzugsweise hat der ID-Token einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt vollumfänglich zum Offenbarungsgehalt der vorliegenden Patentanmeldung gemacht wird, erzeugt werden. Eine weitere Ausführungsform eines als Secure Element ausgebildeten ID Tokens ist in DE 10 2012 215 630 offenbart - dort wird die Identität des Secure Element von einem anderen ID Token, wie z.B. einem amtlichen Dokument, abgeleitet.

Unter einem "mobilen Gegenstand" wird hier ein bewegliches Gut verstanden, wie zum Beispiel ein Fahrzeug, insbesondere ein Wasserfahrzeug, ein Luftfahrzeug, ein Landfahrzeug, insbesondere ein Nutzfahrzeug oder Personenfahrzeug, ein Flugzeug, Motorboot oder eine Baumaschine.

Unter einem "mobilen Telekommunikationsgerät" wird hier insbesondere ein Mobilfunkgerät für ein digitales zellulares Mobilfunksystem, insbesondere nach dem GSM-, UMTS- oder CDMA-Standard verstanden, wie zum Beispiel ein mobiles Telefon, wie zum Beispiel ein Smartphone oder ein mobiler Computer mit einer Mobilfunk-Schnittstelle, wie zum Beispiel ein Laptop-Computer, Notebook-Computer oder Tablet-Computer.

Unter einem "Netzwerk" wird hier ein Kommunikationsnetzwerk verstanden, wie zum Beispiel das Internet.

Unter einem "Dienst-Computersystem" wird hier ein Computersystem verstanden, welches über eine Netzwerk-Schnittstelle zur Verbindung mit dem Netzwerk verfügt, sodass beispielsweise mithilfe eines Internetbrowsers auf von dem Dienst-Computersystem gespeicherte oder generierte Internetseiten zugegriffen werden kann. Insbesondere kann es sich bei dem Dienst-Computersystem um einen Internetserver zur Verfügungstellung einer Anwendung für die Nutzungskontrolle der mobilen Gegenstände handeln, wie zum Beispiel für das sogenannte Carsharing.

Unter "Nutzungskontrolle" wird hier insbesondere die Auswahl, d.h. beispielsweise die Buchung, eines der zur Verfügung stehenden mobilen Gegenstände durch einen der Nutzer verstanden sowie die anschließende Freigabe der Nutzung des ausgewählten mobilen Gegenstandes durch ein entsprechendes Nutzungssignal.

Nach Ausführungsformen der Erfindung erzeugt das Dienst-Computersystem aufgrund des Empfangs des Auswahlsignals eine Anforderung für zumindest ein Attribut des Nutzers, welches in dem ID-Token des Nutzers gespeichert ist. Dieses zumindest eine Attribut benötigt das Dienst-Computersystem zur Identifikation des Nutzers. Als Attribute können hierzu der Name, Vorname und Wohnort des Nutzers verwendet werden und/oder ein Pseudonym des Nutzers, welches als Attribut des Nutzers zumindest temporär in dem ID-Token gespeichert sein kann.

Wenn es sich bei dem ID-Token beispielsweise um den elektronischen Personalausweis der Bundesrepublik Deutschland (nPA) handelt, so kann dessen Pseudonymfunktion verwendet werden, die einen sogenannten "Restricted Identifier" (RID) generieren kann. Dieses Pseudonym wird von dem ID-Token aus einem öffentlichen Schlüssel, zum Beispiel eines Zertifikats des ID-Provider-Computersystems, oder einem Berechtigungszertifikat des Dienst-Computersystems und dem privaten Schlüssel des ID-Token kryptografisch abgeleitet.

Nach Ausführungsformen der Erfindung erfolgt die Übertragung der von dem Dienst-Computersystem generierten Anforderung an ein ID-Provider-Computersystem über das Netzwerk.

Unter einem "ID-Provider-Computersystem" wird hier ein Computersystem verstanden, welches dazu ausgebildet ist, das zumindest eine Attribut aus dem ID-Token auszulesen.

Zum Auslesen des zumindest einen Attributs aus dem ID-Token werden die folgenden Schritte durchgeführt: Authentifizierung des Nutzers gegenüber dem ID-Token, Authentifizierung des ID-Provider-Computersystems gegenüber dem ID-Token über das Netzwerk mit einem Zertifikat, in dem eine Leseberechtigung des ID-Provider-Computersystems für einen Lesezugriff zum Lesen des zumindest einen Attributs aus dem ID-Token definiert ist, nach erfolgreicher Authentifizierung des Nutzers und des ID-Provider-Computersystems gegenüber dem ID-Token, Lesezugriff des ID-Provider-Computersystems auf den ID-Token zum Lesen des zumindest einen Attributs über das Netzwerk, Übertragung des zumindest einen Attributs von dem ID-Token an das ID-Provider-Computersystem mit Ende-zu-Ende-Verschlüsselung über das Netzwerk aufgrund des Lesezugriffs.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen. Insbesondere kann es sich um ein SSL Zertifikat oder ein TLS-Zertifikat handeln.

Nach Ausführungsformen der Erfindung kann dieser Auslesevorgang wie an sich aus DE 10 2008 000 67 B4 oder Weiterbildungen hiervon, wie sie aus DE 10 2008 040 416 A1, DE 10 2009 001 959 A1, DE 10 2009 027 676, DE 2009 027 681 A1, DE 10 2009 027 682 A1, DE 10 2009 027 686 A1, DE 10 2009 027 723 A1, DE 10 2009 046 205 A1 und DE 10 2010 028 133 A1, DE 10 2011 084 728 und DE 10 2011 089 580.9 bekannt sind, durchgeführt werden, wobei die Offenbarungsgehalte dieser Schriften hiermit vollumfänglich zum Offenbarungsgehalt der vorliegenden Patentanmeldung durch Bezugnahme gemacht werden.

Nach Empfang der Antwort von dem zumindest einem aus dem ID-Token ausgelesenen Attribut von dem ID-Provider-Computersystem ordnet das Dienst-Computersystem diese Antwort der von dem Nutzer getroffenen Auswahl des mobilen Gegenstands zu und speichert die Auswahl mit der Benutzeridentifikation als Schlüssel, das heißt mit dem zumindest einen Attribut oder aus dem zumindest einem Attribut abgeleiteten Zugriffsschlüssel, in einem ersten elektronischen Speicher, das heißt einer Datenbank ab.

Dies erfolgt so, dass mit Hilfe des zumindest einen Attributs auf dem ersten elektronischen Speicher von dem Dienst-Computersystem zugegriffen werden kann, um die dazugehörige Auswahl des Nutzers aus dem ersten elektronischen Speicher auszulesen.

Nach Ausführungsformen der Erfindung begibt sich der Nutzer, nachdem er die Buchung durch Eingabe seiner Auswahl vorgenommen hat, zu dem ausgewählten mobilen Gegenstand, um diesen in Benutzung zu nehmen. Hierzu wird ein Nutzungs-Anforderungssignal von dem mobilen Telekommunikationsgerät des Nutzers an das Dienst-Computersystem gesendet. Zur Identifikation des Nutzers kann dann nochmals das zumindest eine Attribut aus dem ID-Token des Nutzers ausgelesen und an das Dienst-Computersystem übertragen werden. Dies kann gemäß der oben genannten Schritte des Auslesevorgangs erfolgen.

Das Dienst-Computersystem greift mithilfe des nochmals ausgelesenen zumindest einen Attributs auf den ersten elektronischen Speicher zu, um die gespeicherte Auswahl auszulesen und überträgt dann ein Nutzungssignal zur Ermöglichung der Nutzung des ausgewählten mobilen Gegenstandes an eine dem Gegenstand zugeordnete Nutzungskontrolleinrichtung, sodass die Inbenutzungnahme des Gegenstands durch den Nutzer ermöglicht wird.

Ausführungsformen der Erfindung sind besonders vorteilhaft, da eine Nutzerregistrierung nicht erforderlich ist. Beispielsweise kann jeder Bürger, der einen nPA hat, als Nutzer ohne Weiteres an dem Verfahren teilnehmen. Ausführungsformen der Erfindung ermöglichen sogar eine anonyme Teilnahme des Nutzers an dem Verfahren, insbesondere wenn ein Pseudonym des Nutzers für die Nutzeridentifikation verwendet wird.

Nach einer Ausführungsform der Erfindung handelt es sich bei der Nutzungskontrolleinrichtung um ein Schließfach mit einer elektronischen Entriegelungsvorrichtung. In dem Schließfach ist ein Schlüssel für den dem Schließfach zugeordneten mobilen Gegenstand deponiert. Unter einem solchen "Schlüssel" wird hier ein mechanischer oder elektronischer Schlüssel, insbesondere eine Chipkarte oder ein RFID-Token verstanden, mithilfe dessen eine Nutzung des Gegenstandes ermöglicht wird.

Nach einer weiteren Ausführungsform der Erfindung ist die Nutzungskontrolleinrichtung integraler Bestandteil des mobilen Gegenstands selbst. Beispielsweise hat der mobile Gegenstand eine elektronische Steuerungseinrichtung, wie zum Beispiel eine Kraftfahrzeugelektronik, deren Bestandteil die Nutzungskontrolleinrichtung sein kann. Die Kraftfahrzeugelektronik hat hierzu eine Netzwerk-Schnittstelle zum Empfang des Nutzungssignals, aufgrund dessen die Kraftfahrzeugelektronik dann eine Zentralverriegelung anspricht, um den mobilen Gegenstand für eine Nutzung freizugeben.

Nach einer Ausführungsform der Erfindung wird von dem mobilen Telekommunikationsgerät ein Positionssignal mit einer Angabe einer aktuellen geografischen Position des mobilen Telekommunikationsgeräts an das Dienst-Computersystem gesendet. Beispielsweise hat das mobile Telekommunikationsgerät einen Satellitenempfänger zur Durchführung einer Ortung mithilfe von Satelliten, wie zum Beispiel einen GPS- oder Galileo-Empfänger. Alternativ können auch andere Ortungsverfahren zur Erzeugung des Positionssignals verwendet werden, wie an sich für Mobilfunknetze bekannt sind. Beispielsweise kann ein Zellidentifikator, d.h. die sog. cellid, der Mobilfunkzelle, in der das mobile Telekommunikationsgerät gerade eingebucht ist, als Positionssignal verwendet werden.

In einem zweiten elektronischen Speicher des Dienst-Computersystems, das heißt in einer zweiten Datenbank, sind die verfügbaren mobilen Gegenstände und deren jeweilige geografische Position gespeichert. Auf der Basis des Positionssignals führt das Dienst-Computersystem dann einen Datenbankzugriff auf die zweite Datenbank durch, um einen oder mehrere der mobilen Gegenstände zu ermitteln, die sich in der Nähe der Position des mobilen Telekommunikationsgeräts und damit des Nutzers befinden. Das Dienst-Computersystem generiert eine Vorschlagsliste, die einen oder mehrere der so ermittelten mobilen Gegenstände beinhaltet.

Diese Liste wird zum Beispiel als Internetseite auf dem mobilen Telekommunikationsgerät angezeigt, sodass der Nutzer durch Auswahl eines der Gegenstände von der Vorschlagliste seine Auswahl eingeben kann. Daraufhin wird das entsprechende, diese Auswahl signalisierende Auswahlsignal von dem mobilen Telekommunikationsgerät an das Dienst-Computersystem übertragen.

Gemäß einer Ausführungsform der Erfindung werden die verfügbaren mobilen Gegenstände auf der Vorschlagliste mit aufsteigender geografischer Entfernung von der aktuellen geografischen Position des mobilen Telekommunikationsgeräts sortiert, sodass an der ersten Stelle der Vorschlagliste der nächstgelegene mobile Gegenstand angegeben ist. Alternativ können noch weitere Parameter in die Sortierung der Vorschlagsliste eingehen, wie zum Beispiel ein bestimmter, vom Nutzer gewünschter Fahrzeugtyp.

Nach einer Ausführungsform der Erfindung lädt der Nutzer mithilfe seines mobilen Telekommunikationsgeräts eine Internetseite des Dienst-Computersystems mit dem Internetbrowser des Telekommunikationsgeräts. Hierzu wird eine Session zwischen dem Dienst-Computersystem, welches die Rolle des Servers einnimmt, und dem mobilen Telekommunikationsgerät aufgebaut und eine Session-ID für diese Session von dem Dienst-Computersystem vergeben.

Diese Session-ID kann in die von dem Dienst-Computersystem erzeugte Anforderung eingehen und somit an das ID-Provider-Computersystem übertragen werden. Das ID-Provider-Computersystem erzeugt seinerseits seine Antwort auf diese Anforderung so, dass die Antwort ebenfalls die Session-ID beinhaltet. Anhand dieser Session-ID kann dann das Dienst-Computersystem die von dem ID-Provider-Computersystem empfangene Antwort seiner zuvor gesendeten Anforderung zuordnen. Dies ist besonders vorteilhaft, wenn mehrere Nutzer gleichzeitig aktiv sind.

Nach einer Ausführungsform der Erfindung handelt es sich bei der Anforderung des Dienst-Computersystems um einen SAML-Request. Das Dienst-Computersystem fungiert also als SAML-Requester (vgl. Security Assertion Markup Language (SAML) V2.0 Technical Overview, OASIS, Committee Draft 02, 25. März 2008). Die Antwort des ID-Provider-Computersystems ist dann als SAML-Response ausgebildet, das heißt das ID-Provider-Computersystem fungiert als SAML-Responder.

Nach Ausführungsformen der Erfindung verfügen die mobilen Gegenstände über eine Netzwerk-Schnittstelle sowie einen Positionssensor, beispielsweise einen Satelliten oder Mobilfunk basierten Positionssensor. Nachdem ein Nutzer die Nutzung eines zuvor ausgewählten mobilen Gegenstandes beendet hat, sendet dieser mobile Gegenstand sein Positionssignal an das Dienst-Computersystem, sodass dieser mobile Gegenstand als verfügbar in der zweiten Datenbank erscheint.

Dies hat den besonderen Vorteil, dass der Nutzer den mobilen Gegenstand nicht zum Beispiel an einen bestimmten Stellplatz wieder zurückgeben muss, sondern im Prinzip an einer beliebigen Stelle abstellen kann. Dies ist insbesondere zur Implementierung eines Carsharing-Systems in einer Großstadt von besonderem Vorteil, da auf diese Art und Weise Carsharing-Fahrzeuge über das gesamte Stadtgebiet verteilt werden, sodass den Nutzern überall in ihrer Nähe Fahrzeuge zur Auswahl zur Verfügung stehen.

In einem weiteren Aspekt betrifft die Erfindung ein Computerprogrammprodukt, insbesondere ein digitales Speichermedium, zur Durchführung eines erfindungsgemäßen Verfahrens.

In einem weiteren Aspekt betrifft die Erfindung ein Datenverarbeitungssystem sowie ein Transportsystem, wie jeweils beansprucht.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Datenverarbeitungssystems und eines erfindungsgemäßen Transportsystems,
- Figur 2: ein Blockdiagramm einer weiteren Ausführungsform eines erfindungsgemäßen Datenverarbeitungssystems und eines erfindungsgemäßen Transportsystems.

Elemente der nachfolgenden Ausführungsformen, die einander entsprechen oder gleichen, werden jeweils mit denselben Bezugszeichen gekennzeichnet.

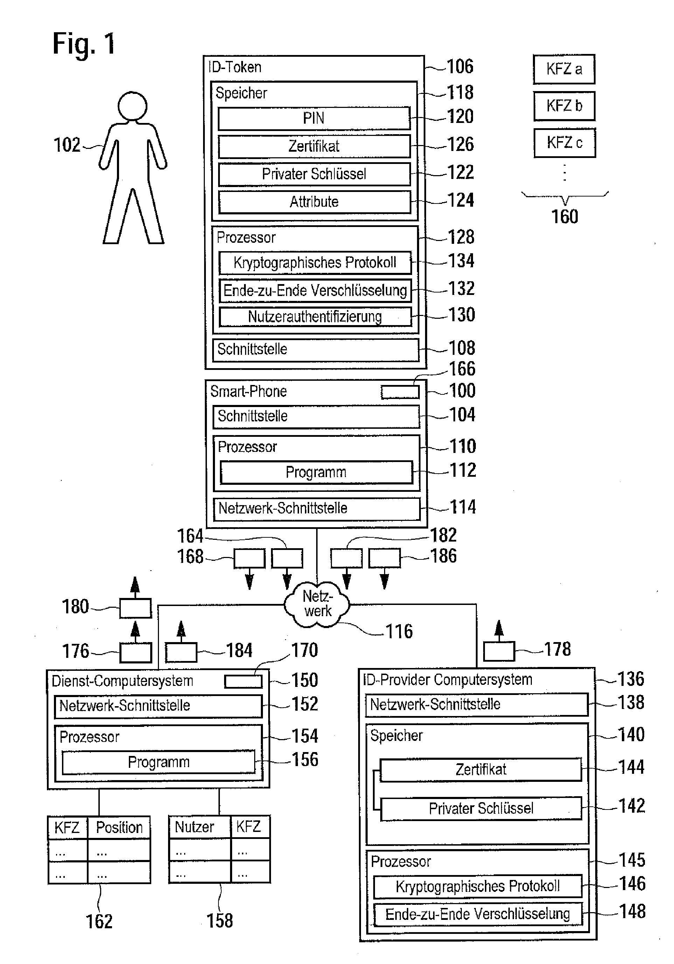

Die Figur 1 zeigt ein mobiles Telekommunikationsgerät, wie zum Beispiel ein Smartphone 100, eines Nutzers 102. Das Smartphone 100 hat eine Schnittstelle 104 zur Kommunikation mit einem ID-Token 106, der eine entsprechende Schnittstelle 108 aufweist. Über die Schnittstelle 104 und 108 wird beispielsweise eine Kommunikation nach einem RFID- oder NFC-Standard zwischen dem ID-Token 106 und dem Smartphone 100 ermöglicht.

Das Smartphone 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Mobilfunknetz handeln, welches mit einem Computernetzwerk, wie zum Beispiel dem Internet, verbunden ist, um eine Verbindung des Smartphone 100 mit dem Internet zu ermöglichen.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine sogenannte Personal Identifikation Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token 106 selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer. Alternative oder zusätzlich kann der ID-Token 106 dazu ausgebildet sein ein Pseudonym des Nutzers zumindest temporär zu speichern und/oder zu erzeugen, beispielsweise einen RID.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d. h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Smartphone 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Smartphone 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptografischen Protokolls zur Authentifizierung eines ID-Provider-Computersystems 136 gegenüber dem ID-Token 106. Bei dem kryptografischen Protokoll kann es sich um ein Challenge-Response-Protokoll basierend auf einem symmetrischen Schlüssel oder einem asymmetrischen Schlüsselpaar handeln.

Beispielsweise wird durch das kryptografische Protokoll ein Extended Access Control (EAC)-Verfahren implementiert, wie es für maschinenlesbare Reisedokumente (machine-readable travel documents - MRTD) spezifiziert ist. Durch erfolgreiche Ausführung des kryptografischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d. h. auch der ID-Token 106 muss sich dann gegenüber dem ID-Provider-Computersystem 136 nach demselben oder einem anderen kryptografischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptografischen Protokolls zwischen dem ID-Token 106 und dem ID-Provider-Computersystem 136 vereinbart wird.

Alternativ zu der in der Figur 1 dargestellten Ausführungsform kann das Smartphone 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen sogenannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptografischen Protokolls ausgeführt. Insgesamt wird also das kryptografische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung aufseiten des ID-Provider-Computersystems 136, beispielsweise basierend auf dem symmetrischen Schlüssel, der anläßlich der Ausführung des kryptografischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem sogenannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zum Empfang eines Auswahlsignals von dem Smartphone 100 ausgebildet sein. Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seine Auswahl eingeben kann.

Je nach der Art des mobilen Gegenstandes muss das Dienst-Computersystem 150 ein oder mehrere Attribute des Nutzers 102 und/oder dessen ID-Token 106 empfangen, um die Identität des Nutzers 102 feststellen zu können.

Das Lesen der erforderlichen Attribute aus dem ID-Token und deren Übertragung an das Dienst-Computersystem, d.h. der Auslesevorgang, kann durch das folgende Lese-Verfahren implementiert werden:

### 1. Authentifizierung des Nutzers 102 gegenüber dem ID-Token 106.

Der Nutzer 102 authentifiziert sich gegenüber dem ID-Token 106. Bei einer Implementierung mit PIN gibt der Nutzer 102 hierzu seine PIN beispielsweise über das Smartphone 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.

### 2. Authentifizierung des ID-Provider-Computersystems 136 gegenüber dem ID-Token 106

Hierzu wird eine Verbindung zwischen dem ID-Token 106 und dem ID-Provider-Computersystem 136 über das Smartphone 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine sogenannte Challenge generiert, d. h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mithilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d. h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.

### 3. Lesen der Attribute

Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.

### 4. Übertragung der Attribute

Diese Attribute werden von dem ID-Provider-Computersystem mithilfe seines Zertifikats 144 signiert und über das Smartphone 100 oder direkt an das Dienst-Computersystem 150 übertragen. Dadurch wird das Dienst-Computersystem 150 über die aus dem ID-Token 106 ausgelesenen Attribute in Kenntnis gesetzt.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der 1D-Token 100 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Das Dienst-Computersystem 150 hat eine erste Datenbank 158, in der die Auswahlen von Nutzern für jeweils einen der mobilen Gegenstände gespeichert sind. Bei den mobilen Gegenständen handelt es sich bei der hier betrachteten Ausführungsform um Kraftfahrzeuge 160, insbesondere die Kraftfahrzeuge Kfz a, Kfz b, Kfz c, ...

Die von den Nutzern ausgewählten Kraftfahrzeuge sind in der Datenbank 158 gespeichert, wobei mit der Identität des betreffenden Nutzers als Schlüssel auf den jeweiligen Eintrag zugegriffen werden kann. Wählt beispielsweise der Nutzer 102 das Kfz a aus, so wird diese Auswahl in der Datenbank 158 gespeichert, indem beispielsweise das amtliche Kennzeichen des Kfz a in der Datenbank 158 gespeichert wird, und zwar so, dass mit dem zumindest einen Attribut des Nutzers 102 als Schlüssel hierauf zugegriffen werden kann.

Das Dienst-Computersystem 150 hat eine weitere Datenbank 162, in der die aktuell für die Auswahl der Nutzer zur Verfügung stehenden mobilen Gegenstände, hier also der Kraftfahrzeuge, gespeichert sind. Beispielsweise ist für jedes Kraftfahrzeug, das ausgewählt, das heißt gebucht, werden kann, dessen amtliches Kennzeichen in der Datenbank 162 gespeichert.

Optional kann zu jedem auswählbaren Kraftfahrzeug, das in der Datenbank 162 angegeben ist, dessen aktuelle Position gespeichert werden, auf die mit dem amtlichen Kennzeichen des Kraftfahrzeugs als Schlüssel zugegriffen werden kann.

Durch das Dienst-Computersystem 150, das ID-Provider-Computersystem 136, das Smartphone 100 und den ID-Token 106, die über das Netzwerk 116 miteinander in Verbindung stehen, wird ein Datenverarbeitungssystem gebildet, welches seinerseits Teil eines Transportsystems ist, welches sich aus der Kombination dieses Datenverarbeitungssystems mit den Kraftfahrzeugen 160 ergibt.

Zum Betrieb dieses Transportsystems wird wie folgt vorgegangen:
a) Der Nutzer 102 startet den Internetbrowser seines Smartphones 100, welcher durch die Programminstruktionen 112 implementiert wird. Der Nutzer 102 gibt dann eine URL des Dienst-Computersystems 150 in den Internetbrowser ein, um eine von den Programminstruktionen 156 des Dienst-Computersystems 150 generierte Internetseite auf sein Smartphone 100 zu laden. Hierzu wird zwischen dem Internetbrowser des Smartphones 100 und dem Dienst-Computersystem 150 eine Session aufgebaut, für die durch das Dienst-Computersystem 150 eine Session-ID vergeben wird.
b) Über die Internetseite kann der Nutzer 102 die aktuell für eine Auswahl zur Verfügung stehende Kraftfahrzeuge aus der Datenbank 162 auswählen. Um diese Auswahl zu erleichtern, kann optional so vorgegangen werden, dass ein Positionssignal 164 von dem Smartphone 100 an das Dienst-Computersystem 150 innerhalb der Session übertragen wird. Das Positionssignal 164 beinhaltet eine Angabe der aktuellen geografischen Position des Smartphones 100 und damit auch der des Nutzers 102.
   Zur Erzeugung des Positionssignals 164 kann das Smartphone 100 einen Positionssensor 166, wie zum Beispiel einen GPS-Empfänger, aufweisen. Durch Ausführung der Programminstruktionen 156 wird das Positionssignal 164 durch das Dienst-Computersystem 150 ausgewertet, um mithilfe der Datenbank 162 einen Vorschlag oder eine Vorschlagliste für den Nutzer 102 zu erzeugen. Beispielsweise wird durch eine Datenbankabfrage der Datenbank 162 festgestellt, welches der aktuell für eine Auswahl zur Verfügung stehenden Kraftfahrzeuge sich am nächsten zu dem Smartphone 100 befindet.
   Alternativ können zum Beispiel die nächsten zehn sich in der Umgebung befindlichen Kraftfahrzeuge in einer Vorschlagliste angezeigt werden. Der Vorschlag bzw. die Vorschlagliste wird im Rahmen der Session zu dem Smartphone 100 übertragen und dort von dem Internetbrowser angezeigt. Der Nutzer 102 kann dann zum Beispiel durch Anklicken von einem der Vorschläge seine Auswahl für die Buchung eines der Kraftfahrzeuge eingeben, sodass ein entsprechendes Auswahlsignal 168 von dem Internetbrowser des Smartphones 100 an das Dienst-Computersystem 150 übertragen wird. Diese Auswahl wird von dem Dienst-Computersystem 150 zusammen mit der zugeordneten Session-ID zum Beispiel in einem Arbeitsspeicher 170 zwischengespeichert.
   Das von dem Nutzer ausgewählte Kraftfahrzeug wird ferner aus der Datenbank 162 gelöscht bzw. dort als nicht verfügbar gekennzeichnet, sodass es von anderen Nutzern nicht ausgewählt werden kann.
c) Das Dienst-Computersystem 150 generiert ferner eine Anforderung für das zumindest eine Attribut des Nutzers, wie zum Beispiel dessen Name, Vorname und Wohnort. Diese Anforderung 176 wird von dem Dienst-Computersystem 150 über das Netzwerk 116 an das ID-Provider-Computersystem 136 gesendet. Vorzugsweise beinhaltet die Anforderung 176 die Session-ID. Die Übertragung der Anforderung 176 kann so erfolgen, dass diese im Rahmen der Session zunächst an den Internetbrowser des Smartphones 100 gesendet wird. Von dort wird die Anforderung 176 an das ID-Provider-Computersystem 136 über das Netzwerk 116 weitergeleitet. Vorzugsweise erfolgt dies, nachdem der Nutzer 102 eine diesbezügliche Bestätigung in den Internetbrowser seines Smartphones 100 eingegeben hat, um die Anforderung 176 zu autorisieren.
d) Zur Ausführung der Anforderung 176 wird sodann das oben beschriebene Leseverfahren (vergleiche oben 1. bis 4.) durchgeführt, wobei das Auslesen der Attribute aus dem ID-Token 106 durch das ID-Provider-Computersystem 136 in an sich bekannter Art und Weise erfolgen kann. Die Attributspezifizierung, das heißt die Spezifizierung derjenigen Attribute, die für das Dienst-Computersystem 150 aus dem ID-Token 106 auszulesen sind, kann in der Anforderung 176 beinhaltet sein oder zum Beispiel durch die in dem Zertifikat 144 spezifizierten Leserechte definiert sein.
e) Die durch das ID-Provider-Computersystem 136 generierte Antwort 178, welche das zumindest eine Attribut des Nutzers 102 beinhaltet, beinhaltet vorzugsweise auch die Session-ID, welche das ID-Provider-Computersystem 136 mit der Anforderung 176 erhalten hat. Nachdem das Dienst-Computersystem 150 die Antwort 178 erhalten hat, ordnet es mithilfe der Session-ID, die in der Antwort 178 beinhaltet ist, die Antwort 178 der in dem Arbeitsspeicher 170 zwischengespeicherten Auswahl des Nutzers 102 zu. Durch Ausführung der Programminstruktionen 156 speichert das Dienst-Computersystem 150 dann diese Buchung des Nutzers in der Datenbank 158 mithilfe des zumindest einen Attributs als Zugriffsschlüssel auf das Kraftfahrzeugkennzeichen des ausgewählten Kraftfahrzeugs ab.
f) Optional generiert das Dienst-Computersystem 150 daraufhin eine Buchungsbestätigung 180, die im Rahmen der Session von dem Dienst-Computersystem 150 an den Internetbrowser des Smartphones 100 übertragen wird, sodass der Nutzer 102 eine Bestätigung seiner Buchung erhält. Die Buchungsbestätigung 180 kann das amtliche Kennzeichen des von dem Nutzer ausgewählten Kraftfahrzeugs, das heißt hier das Kfz a, beinhalten, sowie eine Angabe zu dem aktuellen Standort des Kfzs a. Diese Angabe kann in Form einer von dem Dienst-Computersystem 150 oder zum Beispiel mithilfe von Google Maps erzeugten Karte oder anderen Navigationsdaten an das Smartphone 100 gesendet werden, um dem Nutzer 102 das Auffinden des ausgewählten Kraftfahrzeugs Kfz a zu erleichtern.
g) Der Nutzer 102 kann nach Erhalt der Buchungsbestätigung 180 den Internetbrowser seines Smartphones 100 schließen und dadurch die Session beenden. Der Nutzer 102 begibt sich nun zu seinem ausgewählten Kfz a, um dieses in Benutzung zu nehmen.
h) Nachdem der Nutzer 102 den Standort des Kfzs a erreicht hat, startet er erneut den Internetbrowser seines Smartphones 100, um ein Nutzungs-Anforderungssignal 182 an das Dienst-Computersystem 150 zu richten. Dies kann so erfolgen, dass der Nutzer 102 auf eine mit der Buchungsbestätigung 180 empfangene URL des Dienst-Computersystems 150 klickt, welche spezifisch für die von dem Nutzer 102 vorgenommene Buchung ist. Durch diese URL in der Buchungsbestätigung 180 wird der entsprechende Datenbankeintrag in der Datenbank 158 identifiziert. Aufgrund dieses Nutzungs-Anforderungssignals 182 generiert das Dienst-Computersystem 150 dann ein Nutzungssignal 184, welches über das Netzwerk 116 unmittelbar zu einer Kraftfahrzeugelektronik 172 oder zu einer Entriegelungsvorrichtung 174 am Standort des Kfz a übertragen wird (vergleiche hierzu die Ausführungsformen gemäß Figur 3). Der Nutzer 102 kann dann das Kfz a starten und sein Transportbedürfnis erfüllen, indem er mit dem Kfz a an einen im Prinzip beliebigen Ort fährt.
i) Die Rückgabe des Kfzs a durch den Nutzer 102 kann so erfolgen, dass der Nutzer 102 dieses an einem vorgegebenen Stellplatz wieder abgeben muss, wo die Rückgabe dann registriert wird. Die Rückgabe kann aber auch so erfolgen, dass der Nutzer 102 das Kfz a nach Erreichen seines Fahrtziels abstellt und dann die Rückgabe dem Dienst-Computersystem 150 signalisiert. Dies kann so erfolgen, dass der Nutzer 102 erneut auf die buchungsspezifische URL klickt, welche er mit der Buchungsbestätigung 180 erhalten hat, um diese Rückgabe dem Dienst-Computersystem 150 zu signalisieren. Vorzugsweise erfolgt dies so, dass ein Rückgabesignal 186 von dem Smartphone 100 generiert wird, welches durch Klicken auf die buchungsspezifische URL erzeugt wird, und welches die aktuelle Position des Smartphones 100 und damit auch die des Kfz a beinhaltet, welche von dem Positionssensor 166 sensiert worden ist.
j) Über das Rückgabesignal 186 wird das Dienst-Computersystem 150 also darüber in Kenntnis gesetzt, dass das Kfz a jetzt wieder frei ist sowie auch über die aktuelle Position des Kfz a. Dementsprechend wird die Datenbank 162 aktualisiert, indem dort das Kfz a als auswählbar zusammen mit seiner aktuellen Position gespeichert wird.

Alternativ oder zusätzlich wird aufgrund des Nutzungs-Anforderungssignals 182 und/oder aufgrund des Rückgabesignals 186 nochmals das Leseverfahren gemäß der obigen Punkte 1 - 4 durchgeführt, um das zumindest eine Attribut des Nutzers 102 jeweils nochmals an das Dienst-Computersystem 150 zu übertragen, um den Nutzer zu identifizieren.

Nach Ausführungsformen der Erfindung kann es sich bei dem ID-Token um einen elektronischen Führerschein des Nutzers 102 handeln. In diesem Fall wird vorteilhafterweise aufgrund der Anforderung 176 auch das Attribut aus dem ID-Token 106 ausgelesen, welches angibt, ob der Nutzer 102 eine gültige Fahrerlaubnis hat und für welche Fahrzeugklasse diese gilt. In diesem Fall generiert das Dienst-Computersystem 150 die Buchungsbestätigung 180 nur dann, wenn der Nutzer 102 tatsächlich die erforderliche Fahrerlaubnis hat.

Nach einer Ausführungsform der Erfindung kann auch die Bezahlung für die Ausleihe des Kfzs einen integralen Bestandteil des Transportsystems bilden. Hierzu kann das Datenverarbeitungssystem gemäß Figur 3 der DE 10 2008 000 067 ausgebildet sein, wobei der Nutzer 102 als weiteren ID-Token eine Kreditkarte verwendet. Alternativ kann die Zahlung über das ID-Provider-Computersystem 136 erfolgen, wie es in DE 10 2012 202 731.9 offenbart ist.

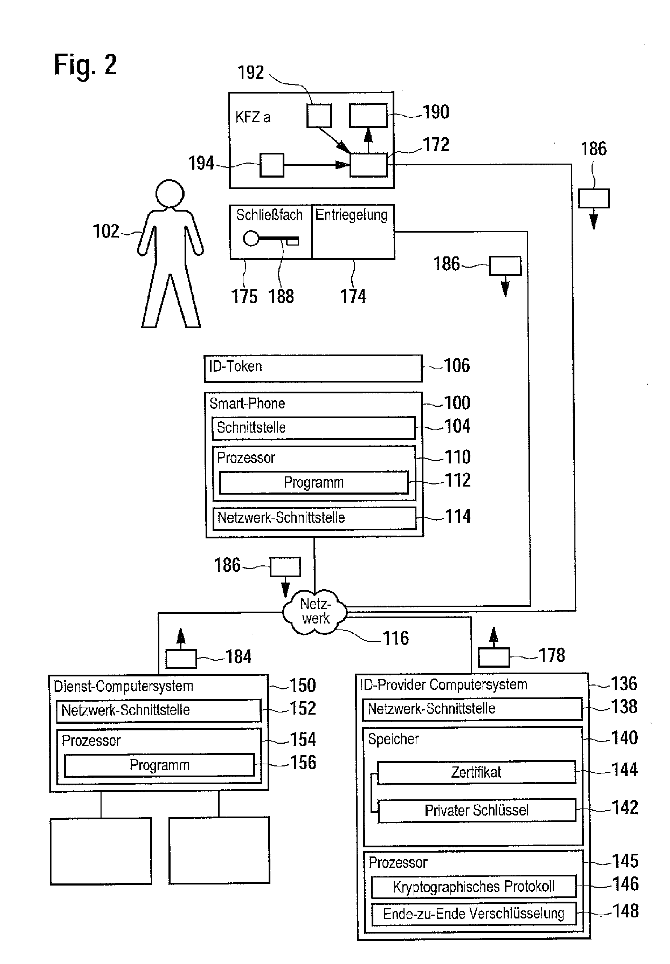

Die Figur 2 zeigt eine Ausführungsform des Transportsystems der Figur 1, nachdem sich der Nutzer 102 zu dem zuvor ausgewählten Kfz a begeben hat. Nach einer ersten Ausführungsform ist das Kfz a in unmittelbarer Nähe eines Schließfachs 175 abgestellt, in dem sich ein Schlüssel 188 des Kfzs a befindet. An dem Schließfach befindet sich die Entriegelungsvorrichtung 174, die eine Netzwerk-Schnittstelle hat und mit dem Netzwerk 116 verbunden ist. Gemäß dieser ersten Ausführungsform wird das Nutzungssignal 184 von dem Dienst-Computersystem 150 über das Netzwerk 116 an die Entriegelungsvorrichtung 174 gesendet, sodass das Schließfach 175 entriegelt wird, und der Nutzer 102 den Schlüssel 188 aus dem Schließfach entnehmen kann. Zusätzlich kann sich auch der Kraftfahrzeugschein in dem Schließfach 175 befinden.

Zur Rückgabe des Kraftfahrzeugs a legt der Nutzer 102 den Schlüssel 188 und gegebenenfalls den Kraftfahrzeugschein in das Schließfach 175 zurück und schließt das Schließfach, was von der Entriegelungsvorrichtung 174 sensiert wird. Die Entriegelungsvorrichtung 174 generiert daraufhin das Rückgabesignal 186.

Nach einer zweiten Ausführungsform der Erfindung wird das Nutzungssignal 184 an die Kraftfahrzeugelektronik 172 des Kraftfahrzeugs Kfz a gesendet. Die Kraftfahrzeugelektronik 172 erzeugt daraufhin ein Entriegelungssignal, welches an eine Zentralverriegelung 190 des Kfz a übertragen wird, sodass das Kfz a entriegelt wird. Der Nutzer 102 kann daraufhin in das Kfz a einsteigen und das Kfz a starten. Zur Rückgabe des Kfz a kann so vorgegangen werden, dass der Nutzer 102 seinen Rückgabewunsch durch Betätigung eines Bedienelements 192, das zum Beispiel an der Instrumententafel des Kfzs a angeordnet sein kann, in die Kraftfahrzeugelektronik 172 eingibt. Diese erzeugt daraufhin das Rückgabesignal 186.

Das Kfz a kann über einen Positionssensor 194 verfügen, wie zum Beispiel einen GPS-Empfänger. In diesem Fall fragt die Kraftfahrzeugelektronik 172 die aktuelle geografische Position des Kfz a von dem Positionssensor 194 ab und überträgt eine entsprechende Angabe der aktuellen Position über das Rückgabesignal 186 an das Dienst-Computersystem 150, sodass die Datenbank 162 dementsprechend aktualisiert werden kann.

Als weitere Alternative kann das Rückgabesignal 186 auch von dem Smartphone 100 generiert werden, wie es in der Ausführungsform gemäß Figur 1 der Fall ist.

### Bezugszeichenliste

- 100: Smart-Phone
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Dienst-Computersystem
- 150:
- 152: Netzwerk-Schnittstelle
- 154: Prozessor
- 156: Programminstruktionen
- 158: Datenbank
- 160: Kraftfahrzeuge
- 162: Datenbank
- 164: Positionssignal
- 166: Positionssensor
- 168: Auswahlsignal
- 170: Arbeitsspeicher
- 172: Kraftfahrzeugelektronik
- 174: Entriegelungsvorrichtung
- 175: Schließfach
- 176: Anforderung
- 178: Antwort
- 180: Buchungsbestätigung
- 182: Nutzungs-Anforderungssignal
- 184: Nutzungssignal
- 186: Rückgabesignal
- 188: Schlüssel
- 190: Zentralverriegelung
- 192: Bedienelement
- 194: Positionssensor

## Patentansprüche

1. Computer implementiertes Verfahren für eine Nutzungskontrolle von mobilen Gegenständen (160) mit folgenden Schritten:
- Übertragung eines Auswahlsignals (168) zur Auswahl eines der mobilen Gegenstände von einem mobilen Telekommunikationsgerät (100) eines Nutzers (102) über ein Netzwerk (116) an ein Dienst-Computersystem (150),
- Erzeugung einer Anforderung (176) durch das Dienst-Computersystem für zumindest ein Attribut des Nutzers (102), wobei das zumindest eine Attribut in einem dem Nutzer (102) zugeordneten ID-Token gespeichert ist,
- Übertragung der Anforderung von dem Dienst-Computersystem an ein ID-Provider-Computersystem (136) über das Netzwerk,
- Authentifizierung des Nutzers gegenüber dem ID-Token,
- Authentifizierung des ID-Provider-Computersystems gegenüber dem ID-Token über das Netzwerk mit einem Zertifikat (144), in dem eine Leseberechtigung des ID-Provider-Computersystems für einen Lesezugriff zum Lesen des zumindest einen Attributs aus dem ID-Token definiert ist,
- nach erfolgreicher Authentifizierung des Nutzers und des ID-Provider-Computersystems gegenüber dem ID-Token, Lesezugriff des ID-Provider-Computersystems auf den ID-Token zum Lesen des zumindest einen Attributs über das Netzwerk,
- Übertragung des zumindest einen Attributs von dem ID-Token an das ID-Provider-Computersystem mit Ende-zu-Ende-Verschlüsselung über das Netzwerk aufgrund des Lesezugriffs,
- Erzeugung einer Antwort (178) auf die Anforderung durch das ID-Provider-Computersystem durch Signierung des ausgelesenen zumindest einen Attributs,
- Übertragung der Antwort von dem ID-Provider-Computersystem an das Dienst-Computersystem über das Netzwerk,
- Zuordnung der Antwort zu der Auswahl durch das Dienst-Computersystem,
- Speicherung der Auswahl durch das Dienst-Computersystem in einem ersten elektronischen Speicher (158) unter Verwendung des zumindest einen Attributs als Zugriffsschlüssel,
- Übertragung eines Nutzungsanforderungssignals (182) zur Anforderung einer Nutzung des ausgewählten Gegenstandes von dem mobilen Telekommunikationsgerät an das Dienst-Computersystem über das Netzwerk und nochmalige Übertragung des zumindest einen Attributs von dem ID-Token des Nutzers zu dem Dienst-Computersystem,
- Zugriff auf den ersten elektronischen Speicher mit Hilfe des nochmals übertragenen zumindest einen Attributs zur Ermittlung der gespeicherten Auswahl durch das Dienst-Computersystem,
- Übertragung eines Nutzungssignals (184) zur Ermöglichung der Nutzung des ausgewählten mobilen Gegenstandes von dem Dienst-Computersystem an eine dem Gegenstand zugeordnete Nutzungskontrolleinrichtung über das Netzwerk.

2. Verfahren nach Anspruch 1, wobei für die nochmalige Übertragung des zumindest einen Attributs von dem ID-Token des Nutzers zu dem Dienst-Computersystem die folgenden Schritte ausgeführt werden:
- aufgrund des Empfangs des Nutzungs-Anforderungssignals Erzeugung einer nochmaligen Anforderung (176) durch das Dienst-Computersystem für das zumindest eine Attribut des Nutzers,
- Übertragung der nochmaligen Anforderung von dem Dienst-Computersystem an das ID-Provider-Computersystem über das Netzwerk,
- nochmalige Authentifizierung des Nutzers gegenüber dem ID-Token,
- nochmalige Authentifizierung des ID-Provider-Computersystems gegenüber dem ID-Token über das Netzwerk mit dem Zertifikat,
- nach den nochmaligen erfolgreichen Authentifizierungen des Nutzers und des ID-Provider-Computersystems gegenüber dem ID-Token, nochmaliger Lesezugriff des ID-Token-Computersystems auf den ID-Token zum Lesen des zumindest eines Attributs über das Netzwerk,
- Übertragung des zumindest einen Attributs von dem ID-Token an das ID-Provider-Computersystem mit Ende-zu-Ende-Verschlüsselung über das Netzwerk aufgrund des nochmaligen Lesezugriffs,
- Nochmalige Erzeugung einer Antwort (178) auf die zweite Anforderung durch das ID-Provider-Computersystem durch Signierung des nochmals ausgelesenen zumindest einen Attributs, wobei der Zugriff auf den ersten elektronischen Speicher mithilfe des nochmals ausgelesenen zumindest einen Attributs erfolgt.

3. Verfahren nach Anspruch 2, wobei es sich bei der Nutzungskontrolleinrichtung um ein Schließfach (175) mit einer elektronischen Entriegelungsvorrichtung (174) handelt, welche mit dem Netzwerk verbunden ist, sodass die elektronische Entriegelungsvorrichtung aufgrund des Empfangs des Nutzungssignals das Schließfach entriegelt, sodass daraufhin der Nutzer einen Schlüssel (188) für die Nutzung des ausgewählten mobilen Gegenstands dem Schließfach entnehmen kann.

4. Verfahren nach Anspruch 2, wobei die Nutzungskontrolleinrichtung einen Bestandteil des mobilen Gegenstands bildet.

5. Verfahren nach einem der vorhergehenden Ansprüche, wobei in einem zweiten elektronischen Speicher (162) gespeichert wird, welche der mobilen Gegenstände aktuell verfügbar sind sowie eine Angabe zu der jeweiligen geografischen Position der verfügbaren Gegenstände, mit folgenden weiteren Schritten:
- Übertragung eines Positionssignals (164) von dem mobilen Telekommunikationsgerät an das Dienst-Computersystem zur Signalisierung einer geografischen Position des Telekommunikationsgeräts,
- Erzeugung eines Vorschlags, welcher einen oder mehrere der verfügbaren Gegenstände beinhaltet, wobei als Auswahlkriterium die geografische Nähe der verfügbaren Gegenstände zu der geografischen Position des mobilen Telekommunikationsgeräts verwendet wird, wobei durch das Auswahlsignal einer der vorgeschlagenen verfügbaren Gegenstände ausgewählt wird.

6. Verfahren nach einem der vorhergehenden Ansprüche mit folgenden weiteren Schritten:
- Aufruf einer ersten Internetseite des Dienst-Computersystems mit einem Internetbrowser (112) des mobilen Telekommunikationsgeräts über das Netzwerk, wobei eine Session zwischen dem Internetbrowser und dem Dienst-Computersystem aufgebaut wird, für welche durch das Dienst-Computersystem eine Session-ID vergeben wird,
- Eingabe des Auswahlsignals über die erste Internetseite durch den Nutzer mithilfe des Internetbrowsers,
wobei die Anforderung (176) die Session-ID beinhaltet, und wobei die Antwort (178) ebenfalls die Session-ID beinhaltet, wobei das Dienst-Computersystem die Antwort des ID-Provider-Computersystems der Anforderung mithilfe der Session-ID zuordnet.

7. Verfahren nach einem der vorhergehenden Ansprüche, wobei es sich bei der Anforderung um einen SAML-Request und wobei es sich bei der Antwort um eine SAML-Response handelt.

8. Verfahren nach einem der vorhergehenden Ansprüche, wobei es sich bei dem ID-Token um einen Hardwaretoken oder einen Softtoken handelt, welcher kryptografisch an einen Hardwaretoken gebunden ist.

9. Verfahren nach einem der vorhergehenden Ansprüche, wobei es sich bei den mobilen Gegenständen um Fahrzeuge, insbesondere Kraftfahrzeuge, handelt.

10. Verfahren nach einem der vorhergehenden Ansprüche, wobei die mobilen Gegenstände jeweils einen Positionssensor (194) und eine Netzwerk-Schnittstelle (172) aufweisen, wobei bei Beendigung der Nutzung des ausgewählten mobilen Gegenstands ein Positionssignal (186) zur Angabe der aktuellen geografischen Position des mobilen Gegenstands von dem Positionssensor generiert und über das Netzwerk an das Dienst-Computersystem gesendet wird, um die zweite Datenbank zu aktualisieren.

11. Computerprogrammprodukt, insbesondere digitales Speichermedium, mit ausführbaren Programminstruktionen zur Durchführung eines Verfahrens nach einem der vorhergehende Patentansprüche.

12. Datenverarbeitungssystem mit
- einem Dienst-Computersystem (150),
- einem ID-Provider-Computersystem (136),
- Nutzungskontrolleinrichtungen (172; 175, 174) zur Kontrolle der Nutzung von je einem mobilen Gegenstand, wobei das Dienst-Computersystem Folgendes umfasst:
- Mittel zum Empfang eines Auswahlsignals (168) zur Auswahl eines der mobilen Gegenstände von einem mobilen Telekommunikationsgerät (100) eines Nutzers (102) über ein Netzwerk (116),
- Mittel zur Erzeugung einer Anforderung (176) für zumindest ein Attribut des Nutzers, wobei das zumindest eine Attribut in einem dem Nutzer zugeordneten ID-Token (106) gespeichert ist,
- Mittel (152) zum Senden der Anforderung an das ID-Provider-Computersystem über das Netzwerk,
- Mittel (152) zum Empfang einer Antwort (178) des ID-Provider-Computersystems auf die Anforderung über das Netzwerk,
- Mittel (156) zur Zuordnung der Antwort zu der Auswahl,
- Mittel (156) zur Speicherung der Auswahl in einem ersten elektronischen Speicher (158),
- Mittel (156) zum Empfang eines Nutzungs-Anforderungssignals (182) zur Anforderung einer Nutzung des ausgewählten Gegenstandes von dem mobilen Telekommunikationsgerät über das Netzwerk,
- Mittel (156) zum Zugriff auf den ersten elektronischen Speicher mit Hilfe des zumindest einen Attributs zur Ermittlung der gespeicherten Auswahl durch das Dienst-Computersystem aufgrund des Empfangs des Nutzungs-Anforderungssignals,
- Mittel (156) zum Senden eines Nutzungssignals (184) zur Ermöglichung der Nutzung des ausgewählten mobilen Gegenstandes an eine dem ausgewählten Gegenstand zugeordnete der Nutzungskontrolleinrichtungen über das Netzwerk, wobei das Dienst-Computersystem zum nochmaligen Empfang des zumindest einen Attributs von dem ID-Token des Nutzers über das ID-Provider-Computersystem aufgrund des Empfangs des Nutzungs-Anforderungssignals ausgebildet ist,
und wobei das ID-Provider-Computersystem Folgendes aufweist:
- Mittel (146) zur Authentifizierung gegenüber dem ID-Token über das Netzwerk mit einem Zertifikat (144), in dem eine Leseberechtigung des ID-Provider-Computersystems für einen Lesezugriff zum Lesen des zumindest einen Attributs aus dem ID-Token definiert ist,
- Mittel (138) zur Durchführung eines Lesezugriffs auf den ID-Token zum Lesen des zumindest einen Attributs über das Netzwerk unter der Voraussetzung einer erfolgreichen Authentifizierung des Nutzers und des ID-Provider-Computersystems gegenüber dem ID-Token,
- Mittel (138, 148) zum Empfang des zumindest einen Attributs von dem ID-Token mit Ende-zu-Ende-Verschlüsselung über das Netzwerk aufgrund des Lesezugriffs,
- Mittel (145) zur Erzeugung der Antwort (178) auf die Anforderung durch Signierung des ausgelesenen zumindest einen Attributs,
- Mittel (138) zum Senden der Antwort an das Dienst-Computersystem über das Netzwerk,
und wobei die Nutzungskontrolleinrichtung eine Netzwerk-Schnittstelle aufweist, um das Nutzungssignal von dem Dienst-Computersystem über das Netzwerk zu empfangenen.

13. Datenverarbeitungssystem nach Anspruch 12, wobei die Nutzungskontrolleinrichtung ein Schließfach (175) zur Hinterlegung eines Schlüssels (188) für den zugeordneten mobilen Gegenstand und eine elektronische Entriegelungsvorrichtung (174) aufweist, die zur Entriegelung des Schließfachs aufgrund des Empfangs des Nutzungssignals ausgebildet ist.

14. Datenverarbeitungssystem nach Anspruch 12, wobei es sich bei der Nutzungskontrolleinrichtung um eine Kraftfahrzeugelektronik (172) handelt, welche dazu ausgebildet ist, eine Zentralverriegelung (190) des Kraftfahrzeugs aufgrund des Empfangs des Nutzungssignals zu entriegeln und ein Starten des Kraftfahrzeugs zu ermöglichen.

15. Datenverarbeitungssystem nach Anspruch 12, 13 oder 14, mit mehreren ID-Token, die jeweils einem Nutzer zugeordnet sind.

16. Transportsystem mit mehreren mobilen Gegenständen, welche jeweils als Fahrzeuge ausgebildet sind, und mit einem Datenverarbeitungssystem nach einem der Ansprüche 12 bis 15.
